# EUROPEAN PATENT SPECIFICATION

(11) **EP 3 918 395 B1**
(45) Date of publication and mention of the grant of the patent: **27.11.2024**
(21) Application number: 20701623.9
(22) Date of filing: 29.01.2020
(51) Int. Cl.: G02B 6/44

(54) **AN OPTICAL FIBER SPLICING JOINT**
GLASFASERSPLEISSVERBINDUNG
JOINT DE RACCORDEMENT DE FIBRE OPTIQUE

(30) Priority: 01.02.2019 IT 201900001473
(43) Date of publication of application: 08.12.2021
(73) Proprietor: Prysmian S.p.A., 20126 Milan (IT)
(72) Inventor: PADDICK, Nathan, 20126 Milano MI (IT)
(74) Representative: Perani & Partners S.p.A.
(86) International application number: PCT/EP2020/052142
(87) International publication number: WO 2020/157117

(56) References cited:
- WO-A1-2017/202797
- WO-A1-2019/008069
- CN-U- 207 008 147
- US-A- 5 546 495
- US-A1- 2011 181 158

## Description

### Field of the invention

The present invention relates to the field of optical fiber splicing joints and optical fiber splicing closures.

### Background of the invention

Typically, optical fiber cables enter into an optical fiber splicing closure which includes splicing trays retaining a plurality of splices. The splicing trays usually are pivotally connected one another or to a central panel. Furthermore, the extra optical fibers are routed and/or coiled in specific areas on the splicing trays or externally to the splicing tray.

The access to the optical splices involves the relative motion of each splicing trays and the respective extra optical fibers. Consequently, the access to the splices is difficult and takes a lot of time to the operators in order to perform optical fiber installation process and/or splicing process.

US 2011/181158 A1 discloses an optical fiber distribution assembly including an enclosure formed by a circular base and a cover. The assembly also includes an inner body formed by four panel members to define four quadrants. Disposed on the inner body are plurality of cable management structures including *inter alia* radius limiters and splice trays.

US 20080205844 A1 discloses splice trays and splice assemblies that provide convenient access to optical fiber slack within a relatively small area or volume. Some splice trays are adapted for use with microstructured optical fibers to further reduce the size of the splice tray or splice assembly. Some splice trays provide fiber routing devices on the cover of the splice tray. The fiber routing device may be positioned on an inside surface of the cover and/or on an outside surface of the cover. The splice trays and/or splice assemblies may be used with or as fiber drop terminals used within multiple dwelling units.

US 2017/0363831 discloses a fiber management tray which can have a body including a bottom wall with side walls extending outwardly from the bottom wall. The fiber management tray can include a termination region that has a first side and a second side. The termination region includes a termination panel that holds connectors. The fiber management tray can include a hinge area for mounting said tray to a tray tower and a storage basket located between the termination region and the hinge area. The storage basket can include a first pocket that communicates with the second side of the termination region and an opposite second pocket that communicates with the first side of the termination region. The fiber management tray can define at least one fiber routing path on each of the first and second pockets of the storage basket. The fiber management tray can define a fiber transition opening for transitioning optical fibers between the second pocket of the storage basket and first side of the termination region. The fiber transition opening can have an access structure for allowing optical fibers to be inserted into the fiber transition opening.

### Summary of the invention

The Applicant has tackled the problem of providing an optical fiber splicing joint allowing an easy and quick access to every splice at all time without the need of storage of the fiber optical splices together with the loops of the optical fibers in pivoting stacked splice trays.

The Applicant has found that providing a splicing tray on the top of the optical fiber splicing joint and fiber splicing trays removably fixed to the splicing tray guarantee an easy and quick access to the optical fiber and to the optical splices.

Therefore, the present invention relates to an optical fiber splicing joint comprising a main body extending along a first direction between a lower fiber receiving portion, configured to receive one or more optical fibers, and an upper fiber splicing portion, the main body comprising two first side portions spaced apart along a second direction perpendicular to the first direction, a splicing tray associated to the upper fiber splicing portion and configured to retain one or more optical fiber splices and a fiber routing tray associated to one of the two first side portions and being configured to route one or more optical fibers towards the splicing tray.

Preferably, a fiber routing tray is associated to each first side portion.

According to the claimed invention, each fiber routing tray extends along the first direction between a lower portion arranged at the lower fiber receiving portion and an upper portion arranged at the upper fiber splicing portion and comprises an outward surface having first routing areas configured to route one or more optical fibers and an inward surface facing a respective first side portion.

Preferably, each fiber routing tray comprises one or more first routing members arranged on the first routing areas, each first routing member being configured to route one or more optical fibers towards the splicing tray.

Preferably, the splicing tray extends along the second direction between two opposed tray side portions, each tray side portion being coupled to the upper portion of the respective fiber routing tray.

Preferably, the main body comprises two second side portions spaced apart along a third direction perpendicular to the first direction and the second direction, the main body having second routing areas arranged at the second side portions, each second routing area being configured to route one or more optical fibers from the lower fiber receiving portion towards the fiber routing tray.

Preferably, each fiber routing tray comprises one or more openings, each opening being configured to allow passage of one or more optical fibers from the second routing areas towards the first routing areas.

Preferably, a first fastening assembly and a second fastening assembly are provided for fastening respectively the first side portions to the fiber routing trays and the fiber routing trays to the splicing tray.

Preferably, an external cover is provided for protecting the optical fibers and the optical fiber splices, the external cover being removably connected to the splicing tray.

Preferably, a connecting assembly is provided at the lower fiber receiving portion of the main body, the connecting assembly being configured to connect the main body to an optical fiber module delivering the one or more optical fibers.

Preferably, each fiber routing tray comprises a first distribution assembly arranged at the lower portion of the fiber routing tray and configured to route one or more optical fibers from the lower fiber receiving portion to the respective first routing areas and/or to the splicing tray and/or to the second routing areas, the main body comprises a second distribution assembly arranged at lower fiber receiving portion and configured to route one or more optical fibers from the lower fiber receiving portion to the second routing areas and/or to the first routing areas.

Preferably, the present invention relates also to an optical fiber splicing closure comprising a casing having openings for receiving one or more optical cables, each optical cable having one or more optical fibers and an optical fiber splicing joint according to any claims 1 to 11.

### Brief description of the drawings

The present invention will now be described in more detail hereinafter with reference to the accompanying drawings, in which some embodiments of the invention are shown.
FIG. 1 is a perspective view of an optical fiber splicing closure with an optical fiber splicing joint according to one embodiment of the present invention,
FIG. 2 is a perspective view of the optical fiber splicing joint of FIG. 1 in a disassembled configurati on,

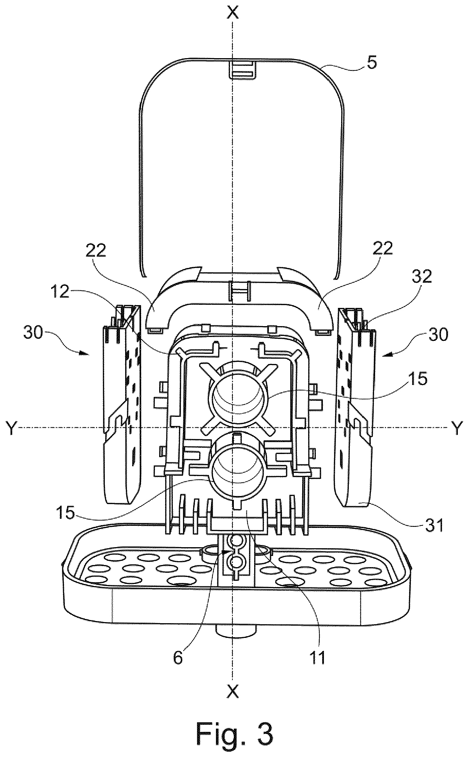

FIG. 3 is a side view of the optical fiber splicing joint of the FIG. 2

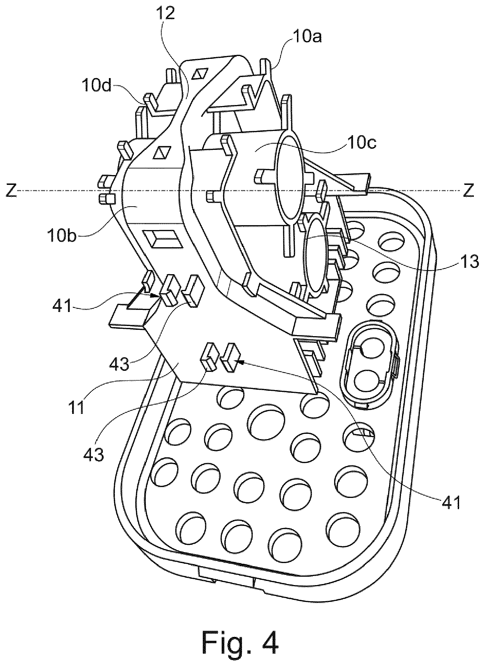

FIG. 4 is a perspective view of a part of the optical fiber splicing joint of FIG. 2,

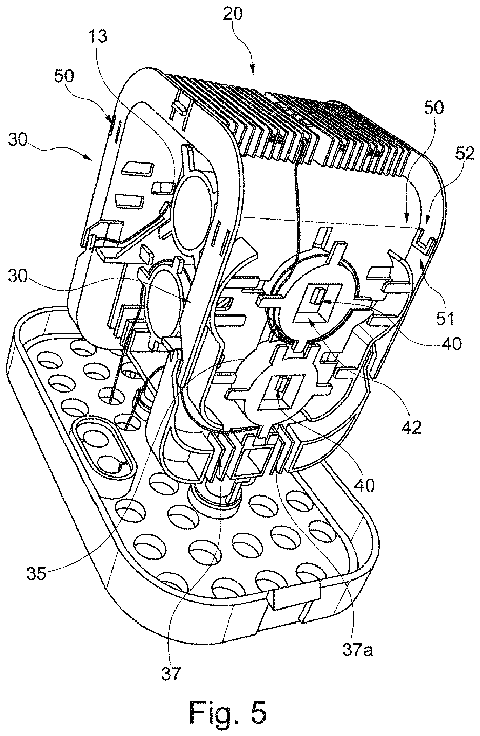

FIG. 5 is a perspective view of the optical fiber splicing joint of FIG. 4 in assembled configuration,

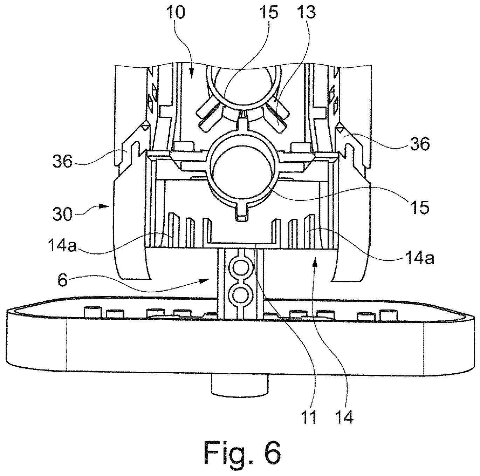

FIG. 6 is a side view of a detail of the optical fiber splicing joint of the FIG. 5,

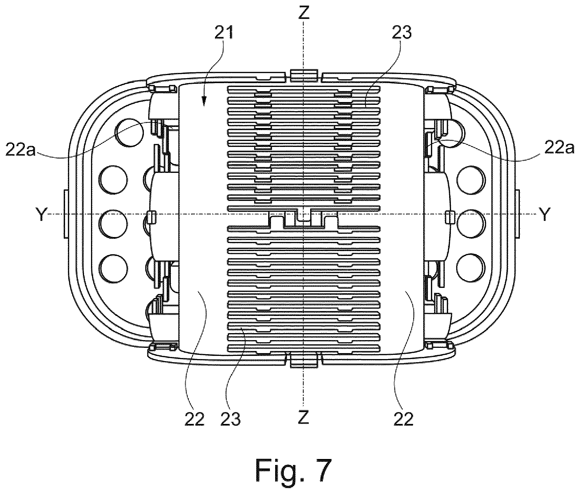

FIG. 7 is an upper view of the optical fiber splicing joint of the FIG. 5,

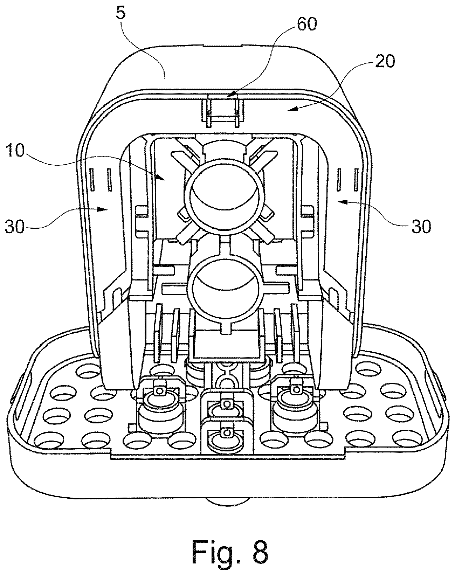

FIG. 8 is a perspective view of the optical fiber splicing joint of FIG. 2 in an assembled configuration.

### Detailed description

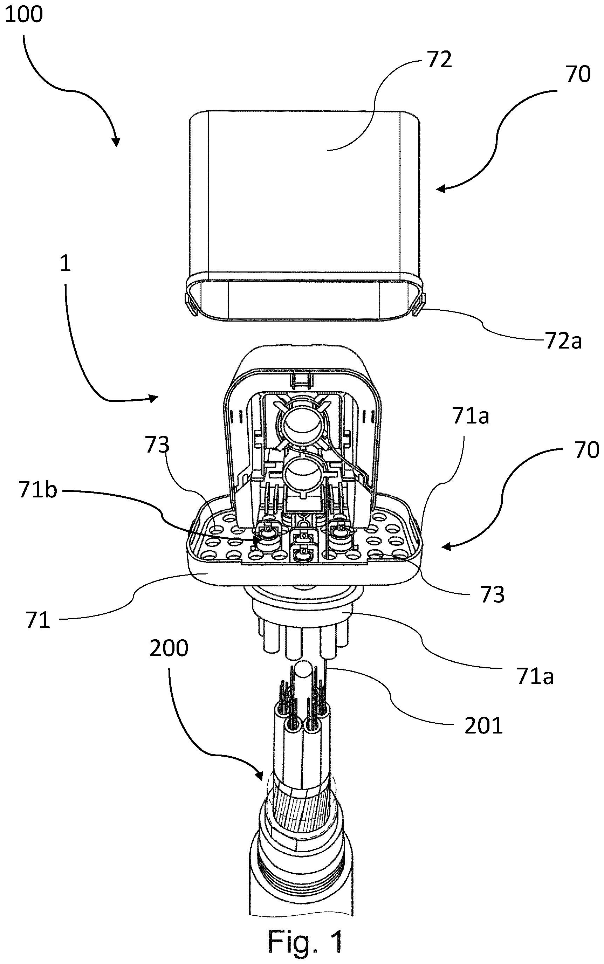

Figure 1 shows an optical fiber splicing closure 100 comprising an optical fiber splicing joint 1 and a casing 70. Preferably, the optical fiber splicing joint 1 is arranged within the casing 70.

The casing 70 has one or more openings for receiving one or more optical cables 200 wherein each optical cable an external sheath which contains one or more optical fibers 201.

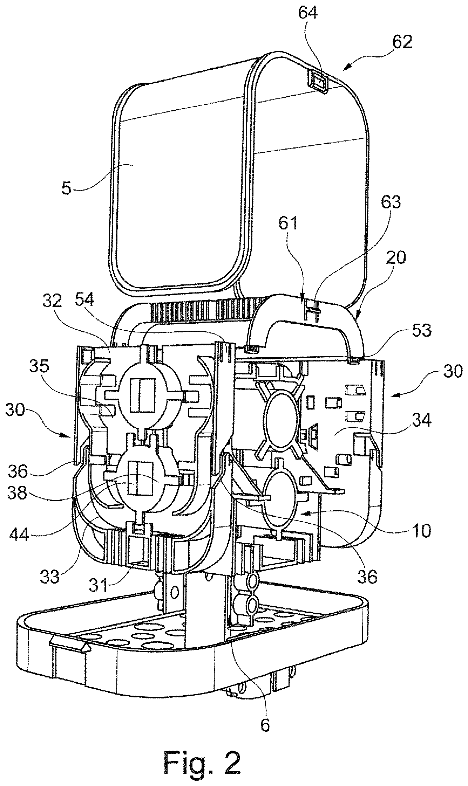

Figure 2 shows an optical fiber splicing joint 1, according to the claimed invention, adapted to manage one or more splices (not illustrated). The optical fiber splicing joint 1 is also adapted to storage one or more extra optical fibers delivered from an optical fiber module (not illustrated).

The optical fiber splicing joint 1 comprises a main body 10, a splicing tray 20 and one or more fiber routing trays 30.

The main body 10 extends along a first direction X-X between a lower fiber receiving portion 11 and an upper fiber splicing portion 12 opposed to the lower fiber receiving portion 11. The lower fiber receiving portion 11 is configured to receive one or more optical fibers from the optical fiber module. The upper fiber splicing portion 12 is configured to guarantee an easily access to the fiber splices and to manage one or more optical fibers coming from the lower fiber receiving portion 11.

The main body 10 comprises two first side portions 10a, 10b mutually spaced apart along a second direction Y-Y perpendicular to the first direction X-X.

Preferably, the main body 10 comprises two second side portion 10c, 10d mutually spaced apart along a third direction Z-Z perpendicular to the first direction X-X and second direction Y-Y.

According to one embodiment, the optical fiber splicing joint 1 comprises a connecting assembly 6 arranged at the lower fiber receiving portion 11. The connecting assembly 6 is configured to secure the main body 10 to an optical fiber module.

Preferably, the connecting assembly 6 comprises one or more connecting element 6a removably fixed to the optical fiber module. Each connecting element 6a extends along the first direction X-X from the lower fiber splicing portion 11.

The splicing tray 20 is associated to the upper fiber splicing portion 12. With this arrangement, the splicing tray 20 is easily accessible to an operator since the splicing tray is arranged opposite the lower fiber receiving portion 11 along the first direction X-X.

Preferably, the optical fiber splicing joint 1 is configured to route the optical fibers from the optical fiber module to the splicing tray 20 to facilitate the access to the splices and/or the process of the fiber splicing.

According to the claimed invention, the splicing tray 20 is configured to retain one or more optical fiber splices directly accessible to the operator. With this arrangement, an operator can manage the end of the optical fibers at the splicing tray 20 without excessive efforts for access to the splicing tray 20.

According to one embodiment, the splicing tray 20 comprises a base 21 connected to the upper fiber splicing portion 12 and extending along the second direction Y-Y and the third direction Z-Z.

In particular, the splicing tray 20 extends along the second direction Y-Y between two opposite tray side portions 22. More preferably, the base 21 has two connecting edges 22a at the respective tray side portions 22. Each connecting edge 22a is configured to be arranged at the respective first side portion 10a, 10b.

The splicing tray 20 further comprises one or more retaining walls 23 configured to retain one or more splices. Specifically, each retaining wall 23 extends along the second direction Y-Y substantially from one connecting edge 22a to the opposite connecting edge 22a and projects from the base 21 along the first direction X-X.

According to one embodiment, the splicing tray 20 is removable connected to the upper fiber splicing portion 12 thereby allowing the optical fiber splicing joint to adapt to different type of splices, splitters or crimps. For example, the splices could have the size 1.3 mm or 2.2 mm.

The fiber routing tray 30 is associated to one of the two first side portions 10a, 10b and is configured to route one or more optical fibers towards the splicing tray 20.

Preferably, as shown in the figures, the fiber routing tray 30 is associated to each first side portion 10a, 10b.

Each fiber routing tray 30 extends along the first direction X-X between a lower portion 31 and an upper portion 32.

According to the claimed invention, the lower portion 31 is arranged at the lower fiber receiving portion 11 and the upper portion 32 is arranged at the upper fiber splicing portion 12.

According to the claimed invention, each fiber routing tray 30 comprises an outward surface 33 configured to route one or more fibers and an inward surface 34 facing the respective first side portion 10a, 10b. Each outward surface 33 has a first routing area 35 configured to route one or more optical fibers.

According to one embodiment, each fiber routing tray 30 is coupled to the first side portion 10a, 10b by connecting the inward surface 34 to the respective first side portion 10a, 10b.

Preferably, each fiber routing tray 30 comprises one or more first routing members 38 arranged on the outward surface 33. Each first routing area 35 is configured to route one or more fibers towards the splicing tray 20.

Each fiber routing tray 30 is, preferably removably, fixed to the respective first side portion 10a, 10b.

According to the embodiment in which the fiber routing tray 30 is removably fixed to the main body 10, the optical fiber splicing joint 1 may be adapted to different types of optical fibers.

Preferably, each fiber routing tray 30 is associated to the splicing tray 20. Specifically, the upper portion 32 of the fiber routing trays 30 is associated to splicing tray 20. In details, each connecting edge 22a is removably fixed to the upper portion 32 of a respective fiber routing tray 30.

Preferably, the interchangeability of both splicing tray 20 and the fiber routing trays 30 allows a wide adaptability of the optical fiber splicing joint 1 to the different types of optical fibers and splices.

According to one embodiment, the main body 10 comprises one or more second routing areas 13 arranged on second side portions 10c, 10d. Each second routing area 13 is configured to route one or more optical fibers from lower fiber receiving portion 11 towards the fiber routing trays 30.

Preferably each second routing area 13 comprises second routing members 15 to route and coil the optical fibers. Each second routing member 15 projects from the second side portion 10c, 10d substantially along the third direction Z-Z.

More preferably, one or more fibers are coiled on the second routing members 15 and then routed to the fiber routing tray 30 and vice-versa.

Preferably, the first routing area 35 and the second routing area 13 cooperate for routing the optical fibers to the splicing tray 20 and/or coil extra optical fibers.

Inside the casing 70 the optical fibers are pulled out from the sheath in order to be routed on the first routing areas 35 and/or second routing areas 13. More preferably, the single optical fibers are routed to the splicing tray 20 in order to facilitate the splicing process.

According to one embodiment, each fiber routing trays 30 comprises a first distribution assembly 37 arranged at the lower portion 31 and configured to route one or more optical fibers from the optical fiber module to the respective first routing areas 35 and/or to the splicing tray 20 and/or to the second routing areas 13.

According to the embodiment shown in the figures, the first distribution assembly 37 comprises one or more dividing walls 37a. Preferably, each dividing wall 37a projects along the second direction Y-Y from each fiber routing tray 30 at the lower portion 31.

Preferably, the first distribution assembly 37 is configured to separate and individually route each optical fiber coming from the optical fiber module.

According to one embodiment, the main body 10 comprises a second distribution assembly 14 arranged at the lower fiber receiving portion 11 for separating and individually routing each optical fiber from the lower fiber receiving portion 11. The second distribution assembly 14 is further configured to route each optical fiber to a respective second routing area 13 and then to the respective fiber routing tray 30.

According to the embodiment shown in the figures, the second distribution assembly 14 comprises one or more dividing walls 14a. Preferably, each dividing wall 14a projects along the third direction Z-Z from each second side portion 10c, 10d at the lower fiber receiving portion 11.

Preferably, each dividing wall 14a and each second routing member 15 cooperate to route each fiber from the lower fiber receiving portion 11 to the second routing areas 13 and then, preferably, to the fiber routing tray 30 and vice-versa.

Preferably, each dividing wall 14a and each second routing area 13 are easily accessible by an operator in order to separate and route the optical fibers coming from the optical fiber module. Furthermore, the accessibility to the second side portion 10c, 10d of the main body 10 simplifies the routing tasks to the operator for example reducing the time for installation of the optical fiber module.

According to one embodiment, each fiber routing tray 30 comprises one or more openings 36 making the outward surface 33 in communication with the inward surface 34.

Each opening 36 is configured to mutually allow passage of the optical fibers from the second routing area 13 to the first routing area 35, thereby allowing passage of the optical fibers from the lower fiber receiving portion 11 to the splicing tray 20 through the fiber routing tray 30 and vice-versa.

Preferably, an external cover 5 is removably connected to the main body 10 and is configured to cover and protect the splicing tray 20 and the fiber routing trays 30 and the optical fibers and the splices arranged thereon.

The external cover 5 allows to protect the optical fibers routed and/or the optical fiber splices maintaining an easy access for the operator on the optical fibers and the splices.

Preferably the external cover 5 is easily removable from the fiber splicing tray 20 and the fiber routing trays 30 so as to facilitate the operation on the optical fibers by the operator.

Preferably, the optical fiber joint 1 comprises a first fastening assembly 40 configured to fasten the first side portions 10a, 10b to the respective fiber routing tray 30. Preferably the fiber joint 1 further comprises a second fastening assembly 50 configured to fasten the fiber routing tray 30 to the splicing tray 20. More preferably, the fiber joint 1 comprises a third fastening 60 assembly configured to fasten the external cover 5 to the splicing tray 20.

According to one embodiment, the first fastening assembly 40 is configured to, preferably removably, fasten each fiber routing tray 30 to the respective first side portion 10a, 10b. Each first fastening assembly 40 comprises one or more first fastening elements 41 and second fastening elements 42 arranged respectively on the first side portion 10a, 10b and on the fiber routing tray 30. Each first fastening element 41 comprises protrusions 43 projecting from the first side portion 10a, 10b along the second direction Y-Y. Each second fastening element 42 comprises seats 44 formed on the fiber routing tray 30. Each protrusion 43 is configured to engage and fit in the seat 44 to restrain the fiber routing tray 30 to the main body 10.

According to one embodiment, not shown in the figures, the first fastening element 41 and the second fastening element 42 are respectively arranged on the inward surface 34 and on the second side portion 10a, 10b.

According to the embodiment shown in the figures, the second fastening assembly 50 is configured to, preferably removably, fasten the splicing tray 20 to the fiber routing trays 30. Preferably, the second fastening assembly 50 fasten each connecting edge 22a to the upper portion of the fiber routing tray 30. More preferably, each second fastening assembly 50 comprises one or more first fastening elements 51 and second fastening elements 52 arranged respectively on each connecting edge 22a and to the upper portion 32. Each first fastening element 51 comprises a protrusion 53. Conversely, each second fastening element 52 comprises a seat 54 formed on the upper portion 32 of the fiber routing tray 30. Each protrusion 53 is configured to engage and fit in the seat 54 to to restrain the fiber routing tray 30 to the splicing tray 20.

According to one embodiment not shown in the figures, the first fastening element 51 and the second fastening element 52 of the second fastening assembly 50 are respectively arranged on fiber routing tray 30 and on the connecting edge 22a.

According to the embodiment shown in the figures, the third fastening assembly 60 is configured to removably fasten the external cover 5 to the splicing tray 20. Preferably, each third fastening assembly 60 comprises one or more first fastening elements 61 and second fastening elements 62 arranged respectively on the splicing tray 20 and the external cover 5. Each first fastening element 61 comprises a protrusion 63 and each second fastening element 62 comprises a seat 64 formed on the external cover 5. Each protrusion 63 is configured to engage and fit in the seat 64 to to restrain the external cover 5 to the splicing tray 20.

According to one embodiment not shown in the figures, the first fastening element 61 and the second fastening element 62 are respectively arranged on the external cover 5 and on the splicing tray 20.

According to one embodiment, the first fastening assembly 40, the second fastening assembly 50 and the third fastening assembly 60 are clips wherein one of the fastening elements is elastically deformable and the other fastening element is a seat.

According to one embodiment, the casing 70 of the optical fiber splicing closure 100 comprises a support tray 71, a cap 72 and the optical fiber splicing joint 1 housed within the cap 72 between the support tray 71 and the cap 72. Preferably, the cap 72 and the support tray 71 comprise respective fastening members configured to be removably connected for removably fastening the cap 72 and the support tray 71. Preferably the fastening members comprise two wings 72a formed on the cap 72 and two teeth 71a formed the support tray 71.

The support tray 71 has a receiving portion 71a connected the optical fiber module for receiving the ends of the optical cables 200 and a connection portion 71b connected to the optical fiber splicing joint 1 through the connecting assembly 6.

According to one embodiment, the support tray 71 extends along the second direction Y-Y and the third direction Z-Z. Preferably, one or more openings 73 are provided on the support tray 71 for receiving the ends of the optical cables.

The optical fiber splicing joint 1 is connected to the support tray 71 at the lower fiber receiving portion 11 thereby receiving the optical fibers and routing them towards the splicing tray 20.

Preferably, the first and second distribution assemblies 37, 14 receive the optical fibers from the openings 73 and route them towards the splicing tray 20 and vice versa.

## Claims

1. An optical fiber splicing joint (1) comprising:
- a main body (10) extending along a first direction (X-X) between a lower fiber receiving portion (11), configured to receive one or more optical fibers, and an upper fiber splicing portion (12), the main body (10) comprising two first side portions (10a, 10b) spaced apart along a second direction (Y-Y) perpendicular to the first direction (X-X);
- a splicing tray (20) associated to the upper fiber splicing portion (12) and configured to retain one or more optical fiber splices,
- a fiber routing tray (30) associated to one of the two first side portions (10a, 10b) and being configured to route one or more optical fibers towards the splicing tray (20);
wherein
each fiber routing tray (30) extends along the first direction (X-X) between a lower portion (31) arranged at the lower fiber receiving portion (11) and an upper portion (32) **characterised in that** said upper portion is arranged at the upper fiber splicing portion (12) and **in that** each fiber routing tray comprises
- an outward surface (33) having first routing areas (35) configured to route one or more optical fibers, and
- an inward surface (34) facing a respective first side portion (10a, 10b).

2. The optical fiber splicing joint (1) according to claim 1, wherein a fiber routing tray (30) is associated to each first side portion (10a, 10b).

3. The optical fiber splicing joint (1) according to claim 1 or 2, wherein each fiber routing tray (30) comprises one or more first routing members (38) arranged on the first routing areas (35), each first routing member (38) being configured to route one or more optical fibers towards the splicing tray (20).

4. The optical fiber splicing joint (1) according to any claims 1 to 3 , wherein the splicing tray (20) extends along the second direction (Y-Y) between two opposed tray side portions (22), each tray side portion (22) being coupled to the upper portion (32) of the respective fiber routing tray (30).

5. The optical fiber splicing joint (1) according to any claims 1 to 4, wherein the main body (10) comprises two second side portions (10c, 10d) spaced apart along a third direction (Z-Z) perpendicular to the first direction (X-X) and the second direction (Y-Y), the main body (10) having second routing areas (13) arranged at the second side portions (10c, 10d), each second routing area (13) being configured to route one or more optical fibers from the lower fiber receiving portion (11) towards the fiber routing tray (30).

6. The optical fiber splicing joint (1) according to claim 5, wherein each fiber routing tray (30) comprises one or more openings (36), each opening (36) being configured to allow passage of one or more optical fibers from the second routing areas (13) towards the first routing areas (35).

7. The optical fiber splicing joint (1) according to any claims 1 to 6, wherein a first fastening assembly (40) and a second fastening assembly (50) are provided for fastening respectively the first side portions (10a, 10b) to the fiber routing trays (30) and the fiber routing trays (30) to the splicing tray (20).

8. The optical fiber splicing joint (1) according to any claims 1 to 7, wherein:
- an external cover (5) is provided for protecting the optical fibers and the optical fiber splices, the external cover (5) being removably connected to the splicing tray (20).

9. The optical fiber splicing joint (1) according any claims 1 to 8, wherein a connecting assembly (6) is provided at the lower fiber receiving portion (11) of the main body (10), the connecting assembly being configured to connect the main body (10) to an optical fiber module delivering the one or more optical fibers.

10. The optical fiber splicing joint (1) according to any claims 5 to 9, wherein:
- each fiber routing tray (30) comprises a first distribution assembly (37) arranged at the lower portion (31) of the fiber routing tray (30) and configured to route one or more optical fibers from the lower fiber receiving portion (11) to the respective first routing areas (35) and/or to the splicing tray (20) and/or to the second routing areas (13),
- the main body (10) comprises a second distribution assembly (14) arranged at lower fiber receiving portion (11) and configured to route one or more optical fibers from the lower fiber receiving portion (11) to the second routing areas (13) and/or to the first routing areas (35).

11. An optical fiber splicing closure (100) comprising:
- a casing (70) having openings for receiving one or more optical cables (200), each optical cable having one or more optical fibers (201), and
- an optical fiber splicing joint (1) according to anyone of claims 1 to 10.

## Patentansprüche

1. Eine Glasfaserspleissverbindung (1), die Folgendes umfasst:
- einen Hauptkörper (10), der sich entlang einer ersten Richtung (X-X) zwischen einem unteren Faseraufnahmeabschnitt (11), der so konfiguriert ist, dass er eine oder mehrere optische Fasern aufnimmt, und einem oberen Faserspleißabschnitt (12) erstreckt, wobei der Hauptkörper (10) zwei erste Seitenabschnitte (10a, 10b) umfasst, die entlang einer zweiten Richtung (Y-Y) senkrecht zur ersten Richtung (X-X) beabstandet sind;
- eine Spleißablage (20), die mit dem oberen Faserspleißabschnitt (12) verbunden und so konfiguriert ist, dass sie eine oder mehrere optische Faserspleiße aufnimmt,
- eine Faserführungsablage (30), die mit einem der beiden ersten Seitenabschnitte (10a, 10b) verbunden und so konfiguriert ist, dass sie eine oder mehrere optische Fasern zu der Spleißablage (20) führt; wobei sich jede Faserleitschale (30) entlang der ersten Richtung (X-X) zwischen einem unteren Abschnitt (31), der an dem unteren Faseraufnahmeabschnitt (11) angeordnet ist, und einem oberen Abschnitt (32) erstreckt, **dadurch gekennzeichnet, dass** der obere Abschnitt an dem oberen Faserspleißabschnitt (12) angeordnet ist und dass jede Faserleitschale umfasst:
- eine Außenfläche (33) mit ersten Leitbereichen (35), die zum Leiten einer oder mehrerer optischer Fasern konfiguriert sind, und
- eine Innenfläche (34), die einem jeweiligen ersten Seitenabschnitt (10a, 10b) zugewandt ist.

2. Glasfaserspleissverbindung (1) nach Anspruch 1, wobei jedem ersten Seitenteil (10a, 10b) eine Faserführungsschale (30) zugeordnet ist.

3. Glasfaserspleissverbindung (1) nach Anspruch 1 oder 2, wobei jede Faserführungsschale (30) ein oder mehrere erste Führungselemente (38) umfasst, die auf den ersten Führungsbereichen (35) angeordnet sind, wobei jedes erste Führungselement (38) so konfiguriert ist, dass es eine oder mehrere optische Fasern in Richtung der Spleißschale (20) führt.

4. Glasfaserspleissverbindung (1) nach einem der Ansprüche 1 bis 3, wobei sich die Spleißablage (20) entlang der zweiten Richtung (Y-Y) zwischen zwei gegenüberliegenden Ablageseitenabschnitten (22) erstreckt, wobei jeder Ablageseitenabschnitt (22) mit dem oberen Abschnitt (32) der jeweiligen Faserführungsablage (30) gekoppelt ist.

5. Glasfaserspleissverbindung (1) nach einem der Ansprüche 1 bis 4, wobei der Hauptkörper (10) zwei zweite Seitenabschnitte (10c, 10d) umfasst, die entlang einer dritten Richtung (Z-Z) senkrecht zur ersten Richtung (X-X) und zur zweiten Richtung (Y-Y) beabstandet sind, wobei der Hauptkörper (10) zweite Leitbereiche (13) aufweist, die an den zweiten Seitenabschnitten (10c, 10d) angeordnet sind, wobei jeder zweite Leitbereich (13) so konfiguriert ist, dass er eine oder mehrere optische Fasern von dem unteren Faseraufnahmeabschnitt (11) zu der Faserleitschale (30) leitet.

6. Glasfaserspleissverbindung (1) nach Anspruch 5, wobei jede Faserführungsschale (30) eine oder mehrere Öffnungen (36) umfasst, wobei jede Öffnung (36) so konfiguriert ist, dass sie den Durchgang einer oder mehrerer optischer Fasern von den zweiten Führungsbereichen (13) zu den ersten Führungsbereichen (35) ermöglicht.

7. Glasfaserspleissverbindung (1) nach einem der Ansprüche 1 bis 6, wobei eine erste Befestigungsanordnung (40) und eine zweite Befestigungsanordnung (50) zum Befestigen der ersten Seitenabschnitte (10a, 10b) an den Faserführungsschalen (30) bzw. der Faserführungsschalen (30) an der Spleißablage (20) vorgesehen sind.

8. Glasfaserspleissverbindung (1) nach einem der Ansprüche 1 bis 7, wobei:
- eine äußere Abdeckung (5) zum Schutz der optischen Fasern und der optischen Faserspleißstellen vorgesehen ist, wobei die äußere Abdeckung (5) abnehmbar mit der Spleißschale (20) verbunden ist.

9. Glasfaserspleissverbindung (1) nach einem der Ansprüche 1 bis 8, wobei eine Verbindungsbaugruppe (6) am unteren Faseraufnahmeabschnitt (11) des Hauptkörpers (10) vorgesehen ist, wobei die Verbindungsbaugruppe so konfiguriert ist, dass sie den Hauptkörper (10) mit einem optischen Fasermodul verbindet, das die eine oder mehrere optische Fasern liefert.

10. Glasfaserspleissverbindung (1) nach einem der Ansprüche 5 bis 9, wobei:
- jedes Faserführungstablett (30) eine erste Verteilungsbaugruppe (37) umfasst, die am unteren Abschnitt (31) des Faserführungstabletts (30) angeordnet und so konfiguriert ist, dass sie eine oder mehrere optische Fasern von dem unteren Faseraufnahmeabschnitt (11) zu den jeweiligen ersten Führungsbereichen (35) und/oder zu dem Spleißtablett (20) und/oder zu den zweiten Führungsbereichen (13) führt,
- der Hauptkörper (10) eine zweite Verteilungsbaugruppe (14) umfasst, die am unteren Faseraufnahmeabschnitt (11) angeordnet ist und so konfiguriert ist, dass sie eine oder mehrere optische Fasern vom unteren Faseraufnahmeabschnitt (11) zu den zweiten Routingbereichen (13) und/oder zu den ersten Routingbereichen (35) leitet.

11. Glasfaserspleissverschluss (100) für optische Fasern, der Folgendes umfasst:
- ein Gehäuse (70) mit Öffnungen zur Aufnahme eines oder mehrerer optischer Kabel (200), wobei jedes optische Kabel eine oder mehrere optische Fasern (201) aufweist, und
- eine Spleißverbindung für optische Fasern (1) nach einem der Ansprüche 1 bis 10.

## Revendications

1. Joint d'épissure de fibre optique (1) comprenant :
- un corps principal (10) s'étendant le long d'une première direction (X-X) entre une partie de réception de fibre inférieure (11), configurée pour recevoir une ou plusieurs fibres optiques, et une partie d'épissure de fibre supérieure (12), le corps principal (10) comprenant deux premières parties latérales (10a, 10b) espacées l'une de l'autre le long d'une deuxième direction (Y-Y) perpendiculaire à la première direction (X-X) ;
- un plateau d'épissure (20) associé à la partie d'épissure de fibre supérieure (12) et configuré pour retenir une ou plusieurs épissures de fibre optique,
- un plateau d'acheminement de fibre (30) associé à l'une des deux premières parties latérales (10a, 10b) et étant configuré pour acheminer une ou plusieurs fibres optiques en direction du plateau d'épissure (20) ;
dans lequel
chaque plateau d'acheminement de fibre (30) s'étend le long de la première direction (X-X) entre une partie inférieure (31) agencée au niveau de la partie de réception de fibre inférieure (11) et une partie supérieure (32)
**caractérisé en ce que** ladite partie supérieure est agencée au niveau de la partie d'épissure de fibre supérieure (12) et **en ce que** chaque plateau d'acheminement de fibre comprend :
- une surface extérieure (33) présentant des premières zones d'acheminement (35) configurées pour acheminer une ou plusieurs fibres optiques, et
- une surface intérieure (34) tournée vers une première partie latérale (10a, 10b) respective.

2. Joint d'épissure de fibre optique (1) selon la revendication 1, dans lequel un plateau d'acheminement de fibre (30) est associé à chaque première partie latérale (10a, 10b).

3. Joint d'épissure de fibre optique (1) selon la revendication 1 ou 2, dans lequel chaque plateau d'acheminement de fibre (30) comprend un ou plusieurs premiers éléments d'acheminement (38) agencés sur les premières zones d'acheminement (35), chaque premier élément d'acheminement (38) étant configuré pour acheminer une ou plusieurs fibres optiques en direction du plateau d'épissure (20).

4. Joint d'épissure de fibre optique (1) selon l'une quelconque des revendications 1 à 3, dans lequel le plateau d'épissure (20) s'étend le long de la deuxième direction (Y-Y) entre deux parties latérales de plateau (22) opposées, chaque partie latérale de plateau (22) étant accouplée à la partie supérieure (32) du plateau d'acheminement de fibre (30) respectif.

5. Joint d'épissure de fibre optique (1) selon l'une quelconque des revendications 1 à 4, dans lequel le corps principal (10) comprend deux deuxièmes parties latérales (10c, 10d) espacées l'une de l'autre le long d'une troisième direction (Z-Z) perpendiculaire à la première direction (X-X) et la deuxième direction (Y-Y), le corps principal (10) présentant des deuxièmes zones d'acheminement (13) agencées au niveau des deuxièmes parties latérales (10c, 10d), chaque deuxième zone d'acheminement (13) étant configurée pour acheminer une ou plusieurs fibres optiques à partir de la partie de réception de fibre inférieure (11) en direction du plateau d'acheminement de fibre (30).

6. Joint d'épissure de fibre optique (1) selon la revendication 5, dans lequel chaque plateau d'acheminement de fibre (30) comprend une ou plusieurs ouvertures (36), chaque ouverture (36) étant configurée pour permettre le passage d'une ou plusieurs fibres optiques à partir des deuxièmes zones d'acheminement (13) en direction des premières zones d'acheminement (35).

7. Joint d'épissure de fibre optique (1) selon l'une quelconque des revendications 1 à 6, dans lequel un premier ensemble de fixation (40) et un deuxième ensemble de fixation (50) sont prévus pour fixer respectivement les premières parties latérales (10a, 10b) aux plateaux d'acheminement de fibre (30) et les plateaux d'acheminement de fibre (30) au plateau d'épissure (20).

8. Joint d'épissure de fibre optique (1) selon l'une quelconque des revendications 1 à 7, dans lequel :
- un couvercle externe (5) est prévu pour protéger les fibres optiques et les épissures de fibre optique, le couvercle externe (5) étant relié de manière détachable au plateau d'épissure (20).

9. Joint d'épissure de fibre optique (1) selon l'une quelconque des revendications 1 à 8, dans lequel un ensemble de connexion (6) est prévu au niveau de la partie de réception de fibre inférieure (11) du corps principal (10), l'ensemble de connexion étant configuré pour connecter le corps principal (10) à un module de fibre optique fournissant les une ou plusieurs fibres optiques.

10. Joint d'épissure de fibre optique (1) selon l'une quelconque des revendications 5 à 9, dans lequel :
- chaque plateau d'acheminement de fibre (30) comprend un premier ensemble de distribution (37) agencé au niveau de la partie inférieure (31) du plateau d'acheminement de fibre (30) et configuré pour acheminer une ou plusieurs fibres optiques à partir de la partie de réception de fibre inférieure (11) vers les premières zones d'acheminement (35) respectives et/ou vers le plateau d'épissure (20) et/ou vers les deuxièmes zones d'acheminement (13),
- le corps principal (10) comprend un deuxième ensemble de distribution (14) agencé au niveau de la partie de réception de fibre inférieure (11) et configuré pour acheminer une ou plusieurs fibres optiques à partir de la partie de réception de fibre inférieure (11) vers les deuxièmes zones d'acheminement (13) et/ou vers les premières zones d'acheminement (35).

11. Fermeture d'épissure de fibre optique (100) comprenant :
- un boîtier (70) présentant des ouvertures pour recevoir un ou plusieurs câbles optiques (200), chaque câble optique présentant une ou plusieurs fibres optiques (201), et
- un joint d'épissure de fibre optique (1) selon l'une quelconque des revendications 1 à 10.
